(19) Europäisches Patentamt
European Patent Office
Office européen des brevets

(11) **EP 1 646 529 B1**

(12) **EUROPÄISCHE PATENTSCHRIFT**

(45) Veröffentlichungstag und Bekanntmachung des Hinweises auf die Patenterteilung:
**30.09.2015 Patentblatt 2015/40**

(21) Anmeldenummer: **04762431.7**

(22) Anmeldetag: **22.07.2004**

(51) Int Cl.:
**B60N 2/02** (2006.01)

(86) Internationale Anmeldenummer:
**PCT/DE2004/001581**

(87) Internationale Veröffentlichungsnummer:
**WO 2005/009781 (03.02.2005 Gazette 2005/05)**

(54) **VERFAHREN UND VORRICHTUNG ZUR DRUCKMESSUNG**

PRESSURE MEASURING METHOD AND DEVICE

PROCEDE ET DISPOSITIF DE MESURE DE PRESSION

(84) Benannte Vertragsstaaten:
**DE FR**

(30) Priorität: **22.07.2003 DE 10333204**

(43) Veröffentlichungstag der Anmeldung:
**19.04.2006 Patentblatt 2006/16**

(73) Patentinhaber: **Conti Temic Microelectronic GmbH**
**90411 Nürnberg (DE)**

(72) Erfinder: **EBEL, Martin**
**85057 Ingolstadt (DE)**

(74) Vertreter: **Bonn, Roman Klemens**
**Continental Automotive GmbH**
**Patente und Lizenzen**
**Postfach 22 16 39**
**80506 München (DE)**

(56) Entgegenhaltungen:
DE-A- 3 804 848     DE-C1- 10 202 579
US-A- 6 098 000

• PATENT ABSTRACTS OF JAPAN Bd. 017, Nr. 388 (C-1086), 21. Juli 1993 (1993-07-21) -& JP 05 068628 A (MATSUSHITA ELECTRIC WORKS LTD), 23. März 1993 (1993-03-23)
• PATENT ABSTRACTS OF JAPAN Bd. 017, Nr. 388 (C-1086), 21. Juli 1993 (1993-07-21) -& JP 05 068627 A (MATSUSHITA ELECTRIC WORKS LTD), 23. März 1993 (1993-03-23)

**EP 1 646 529 B1**

**Beschreibung**

Die Erfindung betrifft ein Verfahren und eine zur Ausführung des Verfahrens vorgesehene Vorrichtung zur Druckmessung eines mit einem Medium befüllten oder befüllbaren Behälters, insbesondere zur Messung eines Innendrucks in einem befüllten oder befüllbaren Behälter, wie dies beispielsweise im Zusammenhang mit dem Befüllen oder Entleeren eines Luftkissens in einem Sitz für ein Kraftfahrzeug sowie in Zusammenhang mit dem Fixieren oder Halten eines vorgegebenen oder vorgebbaren Drucks eines solchen Luftkissens Anwendung findet.

Aufblasbare Luftkissen zur Verwendung in Fahrzeugsitzen und zur Anpassung an unterschiedliche Körperformen oder Sitzgewohnheiten der jeweiligen Fahrzeuginsassen sind allgemein bekannt.

Als nachteilig hat sich bei diesen bekannten Luftkissen und den dazu verwendeten Vorrichtungen zum Befüllen oder Entleeren sowie zum Halten des jeweiligen Drucks jedoch herausgestellt, dass mittels eines zur Druckmessung vorgesehenen Drucksensors, insbesondere während des Befüllens oder Entleerens aufgrund von Leitungseffekten nicht der tatsächliche Innendruck, auch Kissendruck genannt, gemessen wird. Erst im Ruhezustand, also nach einer gewissen Beruhigungszeit ist der tatsächliche Kissendruck mit dem Drucksensor erfassbar. Dies erschwert das rasche und genaue Einstellen sowie Halten vorgegebener Kissendrücke.

Der Erfindung liegt daher die Aufgabe zugrunde ein Verfahren sowie eine zu dessen Ausführung geeignete Vorrichtung anzugeben, mit dem der tatsächliche Innendruck jederzeit, insbesondere auch während eines Befüllens oder Entleerens eines Behälters, mit hinreichender Genauigkeit erfassbar ist.

Diese Aufgabe wird hinsichtlich des Verfahrens erfindungsgemäß mit den Merkmalen des Anspruchs 1 gelöst. Des Weiteren wird diese Aufgabe mit einer Vorrichtung mit den Merkmalen des Anspruchs 6 gelöst.

Die Erfindung geht von der Erkenntnis aus, dass bei bekannten Verfahren oder Vorrichtungen (siehe z.B. JP05068628 A) der Drucksensor beim Befüllen einen zu hohen und beim Entleeren einen zu niedrigen Druck sowie während einer Haltephase den tatsächlichen Druck erst nach Verstreichen einer Beruhigungszeit hinreichend genau misst. Damit liegt für jeden Schaltzustand - Befüllen, Entleeren oder Halten - des Ventils, z. B. eines Steuerventils, ein charakteristischer Fehler vor, der möglichst vollständig kompensiert werden sollte. Dabei ist vorgesehen, dass mittels einer Steuereinheit Informationen über einen das Befüllen oder Entleeren des Behälters repräsentierenden Betriebsparameter, bevorzugt über den jeweiligen Schaltzustand eines das Befüllen oder Entleeren bewirkenden Ventils verarbeitet werden. Dazu wird erfindungsgemäß während eines Befüll- oder Entleerungsvorgangs des Behälters anhand eines mittels eines Drucksensors erfassten Druckwerts in Abhängigkeit von einem Schaltzustand eines zum Befüllen oder Entleeren des Behälters vorgesehenen Ventils ein korrigierter Innendruck bestimmt.

Der Vorteil der Erfindung besteht darin, dass durch die Kompensation des Messfehlers sowohl eine exaktere wie auch eine schnellere Druckmessung in dem Behälter, z. B. in einem Luftkissen des Fahrzeugsitzes, möglich ist, so dass eventuelle Druckänderungen durch mechanische Belastungen hinreichend schnell durch entsprechende Steuerung des Ventils zum Befüllen oder Entleeren ausgeglichen werden.

Die abhängigen Ansprüche sind auf bevorzugte Ausführungsformen der vorliegenden Erfindung gerichtet.

Zur Kompensation des Fehlers wird bevorzugt beim Befüllen oder Entleeren des Behälters in Abhängigkeit vom entsprechenden Schaltzustand des Ventils der vom Drucksensor gemessene Druckwert mit zumindest einem vorgegebenen oder vorgebbaren, für das Befüllen bzw. Entleeren des Behälters charakteristischen Parameter oder Parametersatz beaufschlagt. Auf diese Weise sind nicht nur einfache proportionale Korrekturen, sondern auch Korrekturen ermöglicht, die der Dynamik des Systems, also der Kombination aus Behältervolumen, Schlauchvolumen, Strömungswiderstand, momentanem Kissendruck und Massenträgheit repräsentieren.

Eine erfindungsgemäße Dynamik des Systems besteht darin, dass beim Beginn oder beim Ende des Befüllens oder Entleerens des Behälters in Abhängigkeit vom entsprechenden Schaltzustand des Ventils der vom Drucksensor gemessene Druckwert gefiltert wird. Als eine mögliche Ausführungsform einer Filterung wird beispielsweise eine Filterung mit Tiefpasscharakteristik verwendet. Auf diese Weise werden Überschwinger beim Beginn oder Ende des Befüllens oder Entleerens besonders gut ausgeglichen. Da das Maß des Überschwingens von Startdruck, also vom Druck im Behälter kurz vor Beginn oder Ende des Befüllens oder Entleerens abhängt, ist eine Filterung mit einem adaptiven Tiefpassfilter, welches bei geeignet gewählter Grenzfrequenz als Integrierer arbeitet, besonders geeignet.

Da der Effekt des Überschwingens auf eine bestimmte Zeitspanne nach dem Beginn oder Ende des Befüllens oder Entleerens begrenzt ist, ist es in Bezug auf die zur Verfügung stehende und/oder aufgewandte Rechenleistung der Steuereinheit besonders günstig, wenn die Filterung des vom Drucksensor gemessenen Druckwerts nach dem Beginn oder dem Ende des Befüllens oder Entleerens nur während der Dauer einer vorgegebenen oder vorgebbaren Zeitspanne erfolgt. Außerdem führt eine lang andauernde Filterung zu einer Verzerrung des Signals. Lediglich zur Rauschminimierung wird das Signal, insbesondere das Drucksignal beispielsweise mit einer Grenzfrequenz von 10 Hz gefiltert. Für die Anwendung eines als Integrierer ausgebildeten Filters eignet sich beispielsweise eine Grenzfrequenz von 0,1 Hz. Die Filterparameter können dabei je nach Anfangsdruck verändert werden.

Bevorzugt wird bei einem Schaltzustand des Ventils, bei dem der Behälter weder befüllt noch entleert wird, also beim Halten des aktuellen Innendrucks, in Abhängigkeit vom entsprechenden Schaltzustand des Ventils der vom Drucksensor gemessene Druckwert und der anhand dessen bestimmte Innendruck unverändert, also ohne Korrektur, verarbeitet. Dies ist wiederum günstig im Hinblick auf die Rechenleistung der Steuereinheit, die durch eine direkte Verarbeitung des gemessenen Innendrucks nur minimal belastet wird, so dass die nicht benötigte Rechenleistung für andere Aufgaben, etwa zum kontrollierten Befüllen eines anderen Luftkissens im selben Fahrzeugsitz oder in einem anderen Fahrzeugsitz zur Verfügung steht.

Wenn die Messung des Druckwerts durch den Drucksensor und anhand dessen die Bestimmung des Innendrucks im Bereich einer zur Befüllung und/oder Entleerung des Behälters vorgesehenen Schlauchleitung erfolgt, wird der beobachtete Messfehler durch die Schlauchleitung vergrößert. Die Anordnung des Drucksensors nicht im Behälter selbst, sondern im Bereich der Schlauchleitung ist jedoch vorteilhaft, weil ein an einem Sitzkissen als Beispiel für einen Behälter angebrachter Drucksensor von einer sitzenden Person als störend wahrgenommen wird oder werden kann. Durch die Anordnung des Drucksensors in der Schlauchleitung und die Kompensierbarkeit auch des damit zusätzlich erhöhten Fehlers wird sowohl der Sitzkomfort als auch die Verstellmöglichkeit des Sitzes durch eine raschere und genauere Justierbarkeit verbessert. Zudem ist die Anordnung besonders kostengünstig herstellbar.

Der Vorteil der Erfindung und ihrer Ausgestaltungen besteht insbesondere darin, dass die Kompensation des bisher beobachteten Fehlers mit einfachen Mitteln erfolgt. Anstatt die komplette Dynamik des Systems zu analysieren und für das Gesamtsystem ein Regelungsverfahren von erheblicher Komplexität zu realisieren, geht die Erfindung hier insofern einen besonders einfachen Weg, als dass der Fehler in Bezug auf unterschiedliche Betriebsarten, also das Befüllen des Behälters ("Befüllen"), das Entleeren des Behälters ("Entleeren") und das Halten des aktuellen Innendrucks ("Halten"), getrennt betrachtet wird. Für jede Betriebsart sowie für erlaubte Übergänge zwischen den Betriebsarten ist in der Steuereinheit jeweils eine charakteristische Form der Fehlerkompensation in Form eines geeigneten funktionalen Zusammenhangs hinterlegt. Dabei ist von besonderem Vorteil, dass sich die Fehlerkompensation für das Befüllen und die Fehlerkompensation für das Entleeren durch funktional identische Strukturen bei ggf. lediglich unterschiedlichen Parametern auszeichnet. Das heißt, der funktionale Zusammenhang muss als Software in der Steuereinheit nur einmal hinterlegt sein und kann je nach Schaltzustand des Ventils mit den entsprechenden Parametern beaufschlagt werden und dann sowohl für das Befüllen wie auch für das Entleeren des Behälters verwendet werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen:

FIG 1       eine Vorrichtung zur Druckmessung,

FIG 2       ein elektrisches Ersatzschaltbild der Vorrichtung,

FIG 3a, 3b       typische Befüll- und Entleerungsvorgänge,

FIG 4, 5, 6       typische Befüll- und Entleerungsvorgänge bei korrigierter Druckmessung,

FIG 7       ein Filter, und

FIG 8       das Funktionsprinzip des erfindungsgemäßen Verfahrens in Form eines Zustandsdiagramms.

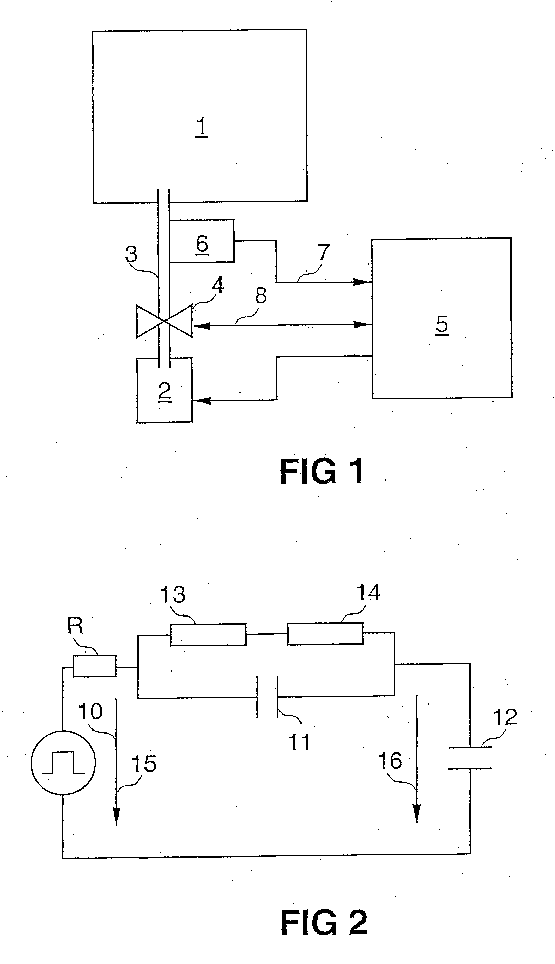

FIG 1 zeigt eine Vorrichtung zur Druckmessung eines mit einem Medium M befüllten oder befüllbaren Behälter 1, dessen Befüllung oder Entleerung mittels einer mit dem Behälter 1 und einem Druckaggregat 2, z. B. einem Kompressor, verbundenen Schlauchleitung 3 erfolgt. Das Befüllen oder Entleeren des Behälters 1 wird mittels eines in der Schlauchleitung 3 angeordrieten Ventils 4 gesteuert, das von einer Steuereinheit 5 geschaltet wird. Die Steuereinheit 5 aktiviert ggf. auch das Druckaggregat 2. Es kann allerdings auch eine automatische Aktivierung des Druckaggregates 2 vorgesehen sein, die dann zumindest ein Druckmessmittel (nicht dargestellt) umfasst, wobei die automatische Aktivierung des Druckaggregates 2 in Abhängigkeit von dem von dem Druckmessmittel gemessenen Druck erfolgt.

Zur Bestimmung eines den Behälter 1 repräsentierenden Innendrucks Pi ist ein an der Schlauchleitung 3 angeordneter Drucksensor 6 vorgesehen. Der vom Drucksensor 6 gelieferte Messwert wird als Druckmesswert Ps an die Steuereinheit 5 übermittelt. Der Druckmesswert Ps wird neben einem Schaltzustand 8 des Ventils 4 zur Einstellung des vorgegebenen Innendrucks Pi in dem Behälter 1 herangezogen.

Je nach Eingriffsmöglichkeit des Bedieners, also z. B. Einstellmöglichkeit des Sitzkissendrucks eines als Behälter 1 ausgebildeten Sitzkissens durch eine sitzende Person, werden zum Befüllen oder Entleeren des Behälters 1 oder zum Halten des Innendrucks Pi in dem Behälter 1 entweder das Ventil 4 oder der Steuereinheit 5 zugeordnete Bedientasten (nicht dargestellt) betätigt. Bei Betätigung des Ventils 4 durch den Bediener wird der jeweilige Schaltzustand 8 der Steuereinheit 5 zugeführt. Bei Betätigung der Bedientasten wird das Ventil 4 durch ein entsprechendes Signal für den gewählten Schaltzustand 8 - Befüllen oder Entleeren - angesteuert. Der ausgewählte Schaltzustand 8 ist damit grundsätzlich auf Seiten der Steuereinheit 5 bereits bekannt und muss nicht notwendig vom Ventil 4 zurückgeliefert werden.

Die Druckmessung kann jedoch positiv beeinflusst werden, wenn der ausgewählte Schaltzustand 8 als solcher erst berücksichtigt wird, wenn eine entsprechende Information hinsichtlich des Schaltzustands 8 vom Ventil 4 vorliegt. Damit können evtl. Totzeiten beim Übergang des Ventils 4 von einem Schaltzustand 8 zum nächsten Schaltzustand 8 geeignet berücksichtigt werden.

FIG 2 zeigt ein elektrisches Ersatzschaltbild der Vorrichtung gemäß FIG 1. Die geschaltete Druckversorgung, d. h., die Kombination aus Druckaggregat 2 und Ventil 4 wird durch eine Quelle 10 ggf. mit einem Vorwiderstand R abgebildet. Das Volumen der Schlauchleitung 3 wird durch einen ersten Kondensator 11 und das Volumen des Behälters 1 durch einen zweiten Kondensator 12 abgebildet. Der Strömungswiderstand der Schlauchleitung 3 wird durch einen ohmschen Widerstand 13 und eine Massenträgheit durch eine Induktivität 14 abgebildet. Die Kombination aus erstem Kondensator 11, Widerstand 13 und Induktivität 14 ist das elektrische Ersatzschaltbild, mit dem die Schlauchleitung 3 abgebildet wird. Es handelt sich dabei um einen Schwingkreis. Über der Quelle 10 kann dann ein Sensordruck 15 und über dem zweiten Kondensator 12 der tatsächliche Behälterdruck 16 gemessen werden: Der Sensordruck 15 entspricht dabei dem vom Drucksensor 6 gelieferten Druckmesswert Ps (FIG 1).

Die Schlauchleitung 3 führt also zu den beobachteten Fehlern bei der Bestimmung des Innendrucks Pi im Behälter 1.

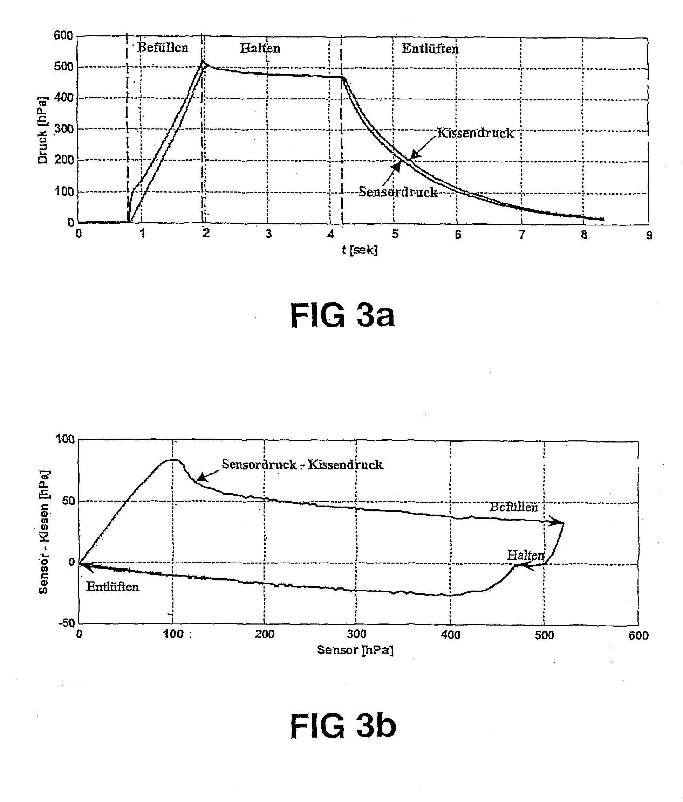

Die Figuren 3a und 3b zeigen typische Befüll- und Entleerungsvorgänge, wobei einerseits die Schaltzustände 8 des Ventils 4 als "Befüllen", "Entleeren" oder "Halten" und andererseits der vom Drucksensor 6 gelieferten Druckmesswert Ps als "Sensordruck" eingezeichnet ist. Ferner ist als "Kissendruck" der tatsächliche, nicht direkt messbare Innendruck Pi des Behälters 1 eingezeichnet. Die Darstellung gemäß FIG 3b ist dabei ein Differenzdiagramm.

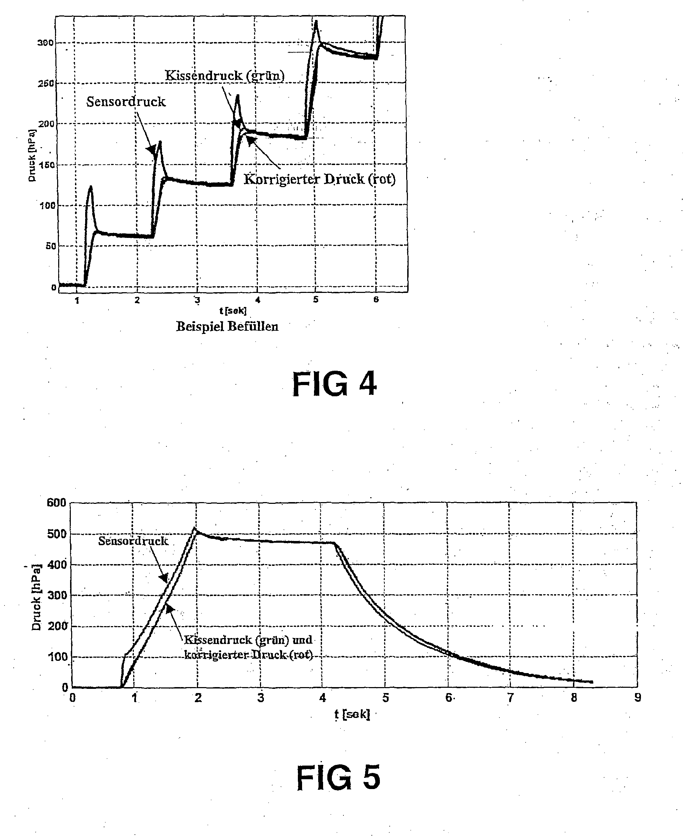

Die Figuren 4, 5 und 6 zeigen typische Befüll- und Entleerungsvorgänge bei korrigierter Druckmessung. Der vom Drucksensor 6 gelieferte Druckmesswert Ps ist wiederum als "Sensordruck" eingezeichnet. FIG 4 zeigt den Vorgang des Befüllens des Behälters 1. Man erkennt die Überschwinger jeweils zu Beginn des Befüllens. Beim rechnerisch korrigierten Druck $P_{korr}$ ("korrigierter Druck") der sich nahezu mit dem tatsächlichen Innendruck Pi im Behälter 1 ("kissendruck") deckt, erkennt man die vollständige Beseitigung des Überschwingens aufgrund der vorgenommenen Filterung.

In FIG 5, die der Darstellung in FIG 3a entspricht, sind nacheinander wieder die Auswirkungen der drei Schaltzustände 8 (Befüllen, Halten, Entleeren) des Ventils 4 dargestellt. Neben dem vom Drucksensor 6 gelieferten Druckmesswert Ps ("Sensordruck") ist der rechnerisch korrigierte Druck $P_{korr}$ ("korrigierter Druck") und der tatsächliche Innendruck Pi im Behälter 1 ("Kissendruck") dargestellt. Man erkennt, dass der rechnerisch korrigierte Druck $P_{korr}$ und der tatsächliche Innendruck Pi im Behälter 1 nahezu deckungsgleich sind.

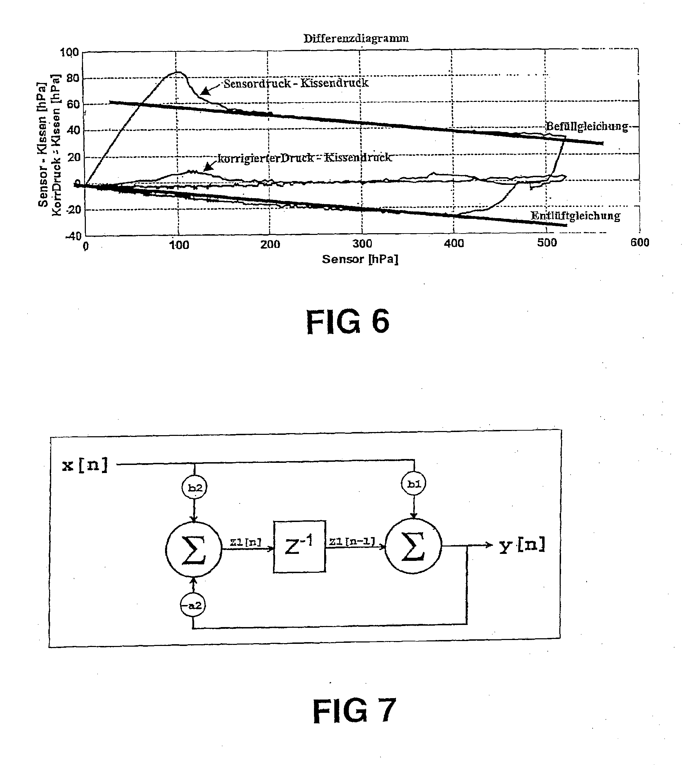

In FIG 6, die der Darstellung in FIG 3b entspricht, sind wiederum die Auswirkungen der drei Schaltzustände 8 (Befüllen, Halten, Entleeren) des Ventils 4 in Form eines Differenzdiagramms dargestellt. An charakteristische Abschnitte des resultierenden Graphen sind Tangenten angelegt. Aus der die jeweilige Tangente beschreibenden Geradengleichung kann eine "Befüllgleichung" oder "Entleerungsgleichung" abgeleitet werden. Die Befüllgleichung kann in der Form

$$\text{Befüllgleichung: } Pi = a1 \times Ps + b1 \qquad [1]$$

und die Entleerungsgleichung in der Form

$$\text{Entleerungsgleichung: } Pi = a2 \times Ps + b2 \qquad [2]$$

geschrieben werden, wobei Pi der Innendruck, a1 und a2 Faktoren für die Steigung der Befüll- oder Entleerungsgleichung angeben und Ps der vom Drucksensor 6 gemessene Sensordruck ist.

Die Parameter a1, b1 und a2, b2 der Befüll- bzw. Entleerungsgleichung sind die Parameter, mit denen der vom Drucksensor 6 gemessene Sensordruck Ps beaufschlagt wird. Diese Beaufschlagung umfasst dabei z. B. die Ermittlung eines Korrekturwertes für den Innendruck Pi - den korrigierten Druck $P_{korr}$ gemäß:

$$P_{korr} = Ps - \left| a1 \times Ps + b1 \right| \qquad [3]$$

$$\Leftrightarrow \quad P_{korr} = Ps - \left| \text{Befüllgleichung } [1] \right| \qquad [4]$$

im Falle des Befüllens und des entsprechenden Schaltzustands 8 des Ventils 4 und

$$P_{korr} = Ps + |a2 \times Ps + b2| \qquad\qquad [5]$$

$$\Leftrightarrow \quad P_{korr} = Ps + |\text{Entleerungsgleichung } [2]| \qquad [6]$$

im Falle des Entleerens und des entsprechenden Schaltzustands 8 des Ventils 4, wobei die Senkrechtstriche "|", wie in der Mathematik üblich, für die Bildung des Betrags stehen.

FIG 7 zeigt ein Filter F mit einer Standard-Filterstruktur, die sich als adaptives Tiefpassfilter TP zur Berücksichtigung der Verhältnisse beim Beginn oder beim Ende des Befüllens oder Entleerens des Behälters 1 eignet.

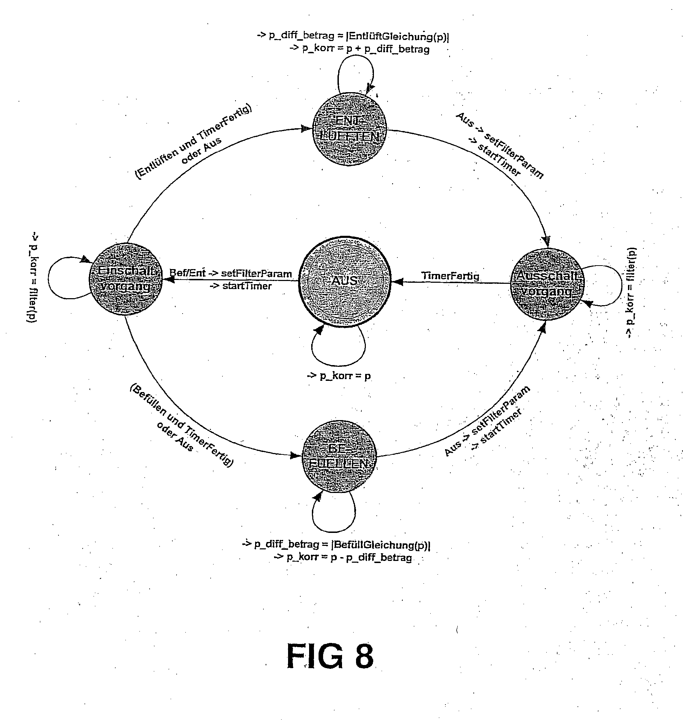

FIG 8 zeigt das Funktionsprinzip des erfindungsgemäßen Verfahrens in Form eines Zustandsdiagramms am Beispiel eines Befüll- oder Entleerungsvorgangs mit Luft als Medium M für ein Sitzkissen in einem Fahrzeug.

Solange das Ventil 4 geschlossen ist, gibt es keine Luftströmung, keine Leitungseffekte und somit misst der Drucksensor 6 den tatsächlichen Innendruck Pi im Behälter 1, dem Sitzkissen. Unmittelbar nach dem Einschalten oder Ausschalten, also beim Beginn oder Ende des Befüllens oder Entleerens, kommt es zu einem Überschwingen. Das Überschwingen tritt insbesondere beim Befüllen, parameterabhängig auch beim Entleeren auf. Dieses Überschwingen ist abhängig vom Startdruck und kann gut mittels des adaptiven Tiefpassfilters TP, welches bei entsprechend gewählter Grenzfrequenz als Integrierer arbeitet, ausgeglichen werden - im Zustandsdiagramm beim Einschaltvorgang dargestellt als "$P_{korr}$ = filter(p)". Hier wird der Einfluss des Volumens der Schlauchleitung 3, der Massenträgheit der Luft und des angeschlossenen Volumens des Behälters 1 kompensiert, welche zusammen ein prinzipiell schwingungsfähiges System bilden (siehe elektrisches Ersatzschaltbild, FIG 2).

Nach einer vorgegebenen oder vorgebbaren Wartezeit, beispielsweise 50 ms, deren Ablauf mittels eines Timers, der vorzugsweise als Software innerhalb der Steuereinheit 5 realisiert ist, macht sich nur noch der Einfluss des Strömungswiderstandes bemerkbar. Zur Kompensation einer mittels des Tiefpassfilters TP bewirkten Verzerrung des Innendrucks Pi und zur Kompensation einer möglichen Verschlechterung der zeitlichen Auflösung wird nach Ablauf der Wartezeit auf die Korrektur mittels Befüll- oder Entleerungsgleichung umgeschaltet. Der Timer wird also bei Beginn oder Ende des Befüllens oder Entleerens gestartet, so dass während des Ablaufs des Timers die Filterung des gemessenen Druckwertes Ps wirksam ist. Nach Ablauf des Timers' erfolgt keine Filterung mehr, so dass die Korrektur auf dem Einfluss der Befüll- oder Entleerungsgleichung basiert.

Die Befüllgleichung und die Entleerungsgleichung sind Geradengleichungen und können direkt aus dem Differenzdiagramm (siehe FIG 6) entnommen werden. Hier wird der Drückabfall am Strömungswiderstand der Schlauchleitung 3 kompensiert.

Bezugszeichenliste

1 Behälter
2 Druckaggregat
3 Schlauchleitung
4 Ventil
5 Steuereinheit
6 Drucksensor
8 Schaltzustand (des Ventils)
10 Quelle
11 erster Kondensator
12 zweiter Kondensator
13 Widerstand
14 Induktivität
15 Sensordruck
16 Behälterdruck

F Filter
Pi Innendruck
$P_{korr}$ korrigierter Druck

Ps     Druckmesswert
R     Vorwiderstand
TP     Tiefpassfilter

**Patentansprüche**

1. Verfahren zur Druckmessung eines mit einem Medium (M) befüllbaren Behälters (1),

    A. wobei wahrend eines Befüll- oder Entleerungsvorgangs anhand eines mittels eines Drucksensors (6) erfassten Druckwerts (Ps) in Abhängigkeit von einem Schaltzustand (8) eines zum Befüllen oder Entleeren des Behälters (1) vorgesehenen Ventils (4) ein korrigierter Innendruck (Pkorr) bestimmt wird,
    **dadurch gekennzeichnet, dass**
    B. beim Beginn oder beim Ende des Befüllens oder Entleerens des Behälters (1) in Abhängigkeit vom entsprechenden Schaltzustand (8) des Ventils (4) der vom Drucksensor (6) gemessene Druckwert (Ps) gefiltert wird.

2. Verfahren nach Anspruch 1, **dadurch gekennzeichnet, dass** der vom Drucksensor (6) gemessene Druckwert (Ps) nach dem Beginn oder dem Ende des Befüllens oder Entleerens des Behälters (1) für die Dauer einer vorgegebenen oder vorgebbaren Zeitspanne gefiltert wird.

3. Verfahren nach einem der Ansprüche 1 oder 2, **dadurch gekennzeichnet, dass** der vom Drucksensor (6) gemessene Druckwert (Ps) beim Beginn oder beim Ende des Befüllens oder Entleerens des Behälters (1) anhand eines Tiefpassfilters (TP), insbesondere eines adaptiven Tiefpassfilters, gefiltert wird.

4. Verfahren nach Anspruch 2, **dadurch gekennzeichnet, dass** der Druckwert (Ps) mittels des Drucksensors (6) während des Befüllens oder Entleerens des Behälters (1) fortlaufend bestimmt wird.

5. Verfahren nach einem der vorangehenden Ansprüche, **dadurch gekennzeichnet, dass** in einem Schaltzustand des Ventils (4), bei dem der Behälter (1) weder befüllt noch entleert wird, der vom Drucksensor (6) gemessene Druckwert (Ps) unverändert verarbeitet wird.

6. Vorrichtung zur Druckmessung eines mit einem Medium (M) befüllbaren Behälters (1)

    A. mit mindestens einem Drucksensor (6) zur Erfassung eines Druckwerts (Ps) wahrend eines Befüll- oder Entleerungsvorgangs und mit einer Steuereinheit (5) zur Erfassung eines Schaltzustands (8) eines zum Befüllen oder Entleeren des Behälters (1) vorgesehenen Ventils (4), wobei mittels der Steuereinheit (5) anhand des Druckwerts (Ps) in Abhängigkeit vom Schaltzustand (8) des Ventils (4) ein korrigierter Innendruck (Pkorr) bestimmbar ist,
    **dadurch gekennzeichnet, dass**
    B. ein Filter (F) zur Filterung des vom Drucksensor (6) gemessenen Druckwerts (Ps) beim Beginn oder beim Ende des Befüllens oder Entleerens des Behälters (1) in Abhängigkeit vom entsprechenden Schaltzustand (8) des Ventils (4) vorgesehen ist.

7. Vorrichtung nach Anspruch 6, **dadurch gekennzeichnet, dass** das Filter (F) als Tiefpassfilter (TP), insbesondere adaptiver Tiefpassfilter, ausgebildet ist.

8. Vorrichtung nach einem der Ansprüche 6 oder 7, **dadurch gekennzeichnet, dass** in einem Schaltzustand (8) des Ventils (4), der weder ein Befüllen noch ein Entleeren des Behälters (1) bewirkt, in Abhängigkeit vom entsprechenden Schaltzustand (8) des Ventils (4) eine direkte Verarbeitung des vom Drucksensor (6) gemessenen Druckwerts (Ps) vorgesehen ist.

9. Vorrichtung nach einem der Ansprüche 6 bis 8, **dadurch gekennzeichnet, dass** ein Zähler vorgesehen ist.

10. Vorrichtung nach einem der Ansprüche 6 bis 9, **dadurch gekennzeichnet, dass** der Drucksensor (6) zur Messung des Druckwerts (Ps) im Bereich einer zur Befüllung und/oder Entleerung des Behälters (1) vorgesehenen Schlauchleitung (3) angeordnet ist.

11. Vorrichtung nach einem der Ansprüche 6 bis 10, **dadurch gekennzeichnet, dass** der Behälter (1) ein Luftkissen in einem Sitz eines Kraftfahrzeugs ist.

**Claims**

1.  Method for measuring the pressure of a vessel (1) which can be filled with a medium (M),

    A. wherein during a filling or emptying process a corrected internal pressure (Pkorr) is determined by reference to a pressure value (Ps) detected by means of a pressure sensor (6), as a function of a switched state (8) of a valve (4) provided for filling or emptying the vessel (1),
    **characterized in that**
    B. at the start or at the end of the filling or emptying of the vessel (1) the pressure value (Ps) measured by the pressure sensor (6) is filtered as a function of the corresponding switched state (8) of the valve (4).

2.  Method according to Claim 1, **characterized in that** the pressure value (Ps) measured by the pressure sensor (6) is filtered for the duration of a predefined or predefinable time period after the start or the end of the filling or emptying of the vessel (1).

3.  Method according to one of Claims 1 or 2, **characterized in that** the pressure value (Ps) measured by the pressure sensor (6) is filtered by reference to a low-pass filter (TP), in particular an adaptive low-pass filter, at the start or at the end of the filling or emptying of the vessel (1).

4.  Method according to Claim 2, **characterized in that** the pressure value (Ps) is continuously determined by means of the pressure sensor (6) during the filling or emptying of the vessel (1).

5.  Method according to one of the preceding claims, **characterized in that,** in a switched state of the valve (4) in which the vessel (1) is neither filled nor emptied, the pressure value (Ps) measured by the pressure sensor (6) is processed without modification.

6.  Device for measuring the pressure of a vessel (1) which can be filled with a medium (M)

    A. with at least one pressure sensor (6) for detecting a pressure value (Ps) during a filling or emptying process, and with a control unit (5) for detecting a switched state (8) of a valve (4) provided for filling or emptying of the vessel (1), wherein a corrected internal pressure (Pkorr) can be determined by reference to the pressure value (Ps), by means of the control unit (5) as a function of the switched state (8) of the valve (4),
    **characterized in that**
    B. a filter (F) for filtering the pressure value (Ps) measured by the pressure sensor (6) at the start or at the end of the filling or emptying of the vessel (1), as a function of the corresponding switched state (8) of the valve (4), is provided.

7.  Device according to Claim 6, **characterized in that** the filter (F) is embodied as a low-pass filter (TP), in particular an adaptive low-pass filter.

8.  Device according to one of Claims 6 or 7, **characterized in that,** in a switched state (8) of the valve (4), which brings about neither filling nor emptying of the vessel (1), direct processing of the pressure value (Ps) measured by the pressure sensor (6), as a function of the corresponding switched state (8) of the valve (4), is provided.

9.  Device according to one of Claims 6 to 8, **characterized in that** a counter is provided.

10. Device according to one of Claims 6 to 9, **characterized in that** the pressure sensor (6) for measuring the pressure value (Ps) is arranged in the region of a hose line (3) provided for filling and/or emptying the vessel (1).

11. Device according to one of Claims 6 to 10, **characterized in that** the vessel (1) is an air cushion in a seat of a motor vehicle.

**Revendications**

1. Procédé pour mesurer la pression d'un réceptacle (1) pouvant contenir un fluide (M),

   A. une pression intérieure corrigée (Pkorr) étant déterminée pendant un processus de remplissage ou de vidange à l'appui d'une valeur de pression (Ps), détectée par un capteur de pression (6), en fonction d'un état de commutation (8) d'une vanne (4) prévue pour le remplissage ou la vidange du réceptacle (1),
   **caractérisé en ce que**
   B. la valeur de pression (Ps) mesurée par le capteur de pression (6) est filtrée au début ou à la fin du remplissage ou de la vidange du réceptacle (1), en fonction de l'état de commutation (8) correspondant de la vanne (4).

2. Procédé selon la revendication 1, **caractérisé en ce que** la valeur de pression (Ps) mesurée par le capteur de pression (6) est filtrée, après le début ou la fin du remplissage ou de la vidange du réceptacle (1), pour la durée d'un intervalle de temps prédéfini ou prédéfinissable.

3. Procédé selon la revendication 1 ou 2, **caractérisé en ce que** la valeur de pression (Ps) mesurée par le capteur de pression (6) est filtrée, au début ou à la fin du remplissage ou de la vidange du réceptacle (1), au moyen d'un filtre passe-bas (TP), en particulier un filtre passe-bas adaptatif.

4. Procédé selon la revendication 2, **caractérisé en ce que** la valeur de pression (Ps) est déterminée en continu au moyen du capteur de pression (6) pendant le remplissage ou la vidange du réceptacle (1).

5. Procédé selon l'une quelconque des revendications précédentes, **caractérisé en ce que** dans un état de commutation de la vanne (4), dans lequel le réceptacle (1) n'est ni rempli ni vidé, la valeur de pression (Ps) mesurée par le capteur de pression (6) est traitée sous forme inchangée.

6. Dispositif pour mesurer la pression d'un réceptacle (1) pouvant contenir un fluide (M),

   A. comportant au moins un capteur de pression (6) destiné à détecter une valeur de pression (Ps) pendant un processus de remplissage ou de vidange et comportant une unité de commande (5) destinée à détecter un état de commutation (8) d'une vanne (4) prévue pour le remplissage ou la vidange du réceptacle (1), une pression intérieure corrigée (Pkorr) pouvant être déterminée au moyen de l'unité de commande (5), à l'appui de la valeur de pression (Ps), en fonction de l'état de commutation (8) de la vanne (4),
   **caractérisé en ce que**
   B. il est prévu un filtre (F) permettant de filtrer la valeur de pression (Ps) mesurée par le capteur de pression (6) au début ou à la fin du remplissage ou de la vidange du réceptacle (1), en fonction de l'état de commutation (8) correspondant de la vanne (4).

7. Dispositif selon la revendication 6, **caractérisé en ce que** le filtre (F) est réalisé sous la forme d'un filtre passe-bas (TP), en particulier un filtre passe-bas adaptatif.

8. Dispositif selon l'une quelconque des revendications 6 ou 7, **caractérisé en ce que**, dans un état de commutation (8) de la vanne (4) qui déclenche ni le remplissage ni la vidange du réceptacle (1), il est prévu un traitement direct de la valeur de pression (Ps) mesurée par le capteur de pression (6) en fonction de l'état de commutation (8) correspondant de la vanne (4).

9. Dispositif selon l'une quelconque des revendications 6 à 8, **caractérisé en ce qu'**il est prévu un compteur.

10. Dispositif selon l'une quelconque des revendications 6 à 9, **caractérisé en ce que** le capteur de pression (6) pour mesurer la valeur de pression (Ps) est disposé dans la zone d'une conduite flexible (3) prévue pour le remplissage et/ou la vidange du réceptacle (1).

11. Dispositif selon l'une quelconque des revendications 6 à 10, **caractérisé en ce que** le réceptacle (1) est un coussin d'air dans un siège d'un véhicule automobile.

FIG 1

FIG 2

# FIG 3a

# FIG 3b

Beispiel Befüllen

# FIG 4

# FIG 5

**FIG 6**

**FIG 7**

$\rightarrow$ p_diff_betrag = |EntlüftGleichung(p)|
$\rightarrow$ p_korr = p + p_diff_betrag

(Entlüften und TimerFertig)
oder Aus

Aus -> setFilterParam
-> startTimer

ENT
LÜFTEN

$\rightarrow$ p_korr = filter(p)

Einschalt
vorgang

Bef/Ent -> setFilterParam
-> startTimer

AUS

TimerFertig

Ausschalt
vorgang

$\rightarrow$ p_korr = filter(p)

$\rightarrow$ p_korr = p

(Befüllen und TimerFertig)
oder Aus

Aus -> setFilterParam
-> startTimer

BE
FÜLLEN

$\rightarrow$ p_diff_betrag = |BefüllGleichung(p)|
$\rightarrow$ p_korr = p - p_diff_betrag

# FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 05068628 A